(19) Europäisches Patentamt
European Patent Office
Office européen des brevets

(11) Veröffentlichungsnummer: **0 115 847**
**B1**

(12) # EUROPÄISCHE PATENTSCHRIFT

(45) Veröffentlichungstag der Patentschrift: **15.11.89**

(51) Int. Cl.⁴: **C 08 L 59/04,** C 08 L 75/06

(21) Anmeldenummer: **84100983.0**

(22) Anmeldetag: **01.02.84**

(54) **Schlagzäh modifiziertes Polyoxymethylen und daraus hergestellte Formkörper.**

(30) Priorität: **04.02.83 DE 3303761**

(43) Veröffentlichungstag der Anmeldung:
**15.08.84 Patentblatt 84/33**

(45) Bekanntmachung des Hinweises auf die Patenterteilung:
**15.11.89 Patentblatt 89/46**

(84) Benannte Vertragsstaaten:
**AT BE CH DE FR GB IT LI NL SE**

(56) Entgegenhaltungen:
**EP-A-0 038 881**
**DE-A-2 051 028**
**DE-B-1 193 240**
**DE-B-2 209 985**

(73) Patentinhaber: **HOECHST AKTIENGESELLSCHAFT, Postfach 80 03 20, D-6230 Frankfurt am Main 80 (DE)**

(72) Erfinder: **Reske, Eckart, Dr., Am Forsthaus 25a, D-6238 Hofheim am Taunus (DE)**
Erfinder: **Wolters, Ernst, Dr., Am Erdbeerstein 48, D-6240 Königstein/Taunus (DE)**

**EP 0 115 847 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Seit langem werden Polyoxymethylene, die im wesentlichen Oxymethylen-Einheiten enthalten, als vielseitige Werkstoffe verwendet. Sie zeichnen sich insbesondere durch hohe Festigkeit und Härte sowie durch gute Beständigkeit gegenüber Chemikalien aus und können daher vielfach an Stelle von Metallen eingesetzt werden. Allerdings weisen die Polyoxymethylene eine relativ geringe Zähigkeit, insbesondere eine relativ niedrige Kerbschlagzähigkeit auf, was ihre Brauchbarkeit für manche Zwecke einschränkt.

Es ist bekannt, daß man die Zähigkeit harter und relativ spröder Thermoplasten verbessern kann, indem man in geeigneter Weise vernetzte oder unvernetzte Elastomere einarbeitet. In der DE-Patentschrift 1 193 240 sowie in der DE-Offenlegungsschrift 2 051 028 werden Polyurethane als Elastomere zur Modifizierung von Polyoxymethylenen vorgeschlagen.

In der besagten DE-Patentschrift 1 193 240 werden für diesen Zweck Polyurethane eingesetzt, die unter Verwendung von vorzugsweise aromatischen Diisocyanaten hergestellt werden und, soweit beschrieben, eine Reißdehnung von ca. 500 % aufweisen (siehe hierzu insbesondere die Beispiele). In der erwähnten DE-Offenlegungsschrift 2 051 028 werden - wie auch in der DE-Patentschrift 1 193 240 - aliphatische Diisocyanate als Komponenten zur Herstellung geeigneter Polyurethane offenbart. Bevorzugt sind jedoch auch hier aromatische Polyurethane mit einer Reißdehnung von vorzugsweise 300 - 800 %. Die Mischungen nach dieser DE-Offenlegungsschrift enthalten vorzugsweise 60 - 40 Gew.-% Oxymethylenpolymeres und dementsprechend vorzugsweise 40 - 60 Gew.-% Polyurethan, da bei Verwendung höherer oder niedrigerer Mengen der beiden Komponenten gemäß der Lehre dieser DE-OS die Eigenschaften des erhaltenen Gemisches den physikalischen und chemischen Eigenschaften der überwiegenden Komponente angeblich sehr nahe kommen (vgl. Seite 6, letzter Absatz dieser DE-Offenlegungsschrift).

Aus der DE-Auslegeschrift 2 209 985 sind weiterhin Mischungen aus Polyoxymethylen, Glasfasern und 0,5 - 10 Gew.-% (bezogen auf Gesamtmischung) eines hochmolekularen Polyurethans bekannt. Gemäß den Beispielen können Polyurethane auf Basis von aromatischen wie auch von aliphatischen Diisocyanaten eingesetzt werden, wobei die Shore-Härten A dieser Polyurethane 85 und höher liegen.

Aufgabe der vorliegenden Erfindung war es entsprechende Mischungen bereitzustellen, welche die Nachteile des Standes der Technik nicht aufweisen und die insbesondere Formkörper mit gutem Schlagzähverhalten und matter Oberfläche erzmöglichen.

Es wurde nun gefunden, daß sich diese Aufgabe in überraschender Weise dadurch lösen läßt, daß als Modifizierungsmittel für Polyoxymethylen ein Polyurethan eingesetzt wird, das aus rein aliphatischen Komponenten besteht und eine Shore-Härte A von höchstens 81 und eine Reißdehnung von 800 - 1 500 % aufweist.

Die Erfindung betrifft daher eine Mischung bestehend im wesentlichen aus Polyoxymethylen und 5 bis 60 Gew.-%, vorzugsweise 10 bis 40 Gew.-%, und insbesondere 10 bis 30 Gew.-%, bezogen auf die Gesamtmischung, an Polyurethan, die dadurch gekennzeichnet ist, daß das Polyurethan ausschließlich aus aliphatischen Komponenten aufgebaut ist, eine Reißdehnung von 800 - 1 500 %, vorzugsweise von 1 000 - 1 500 % und eine Shore-Härte A von höchstens 81, vorzugsweise 80 - 60 aufweist.

Weiterhin bezieht sich die Erfindung auf Formkörper, hergestellt aus dieser Mischung.

Erfindungsgemäß werden als Basispolymere die bekannten Polyoxymethylene eingesetzt, wie sie beispielsweise in der DE-OS-2 947 490 beschrieben sind. Es handelt sich hierbei im wesentlichen um unverzweigte lineare Polymere, die in der Regel mindestens 80 %, vorzugsweise mindestens 90 % Oxymethyleneinheiten ($-CH_2O-$) enthalten. Der Begriff Polyoxymethylene umfaßt dabei sowohl Homopolymere von Formaldehyd oder von seinen cyclischen Oligomeren wie Trioxan oder Tetroxan als auch entsprechende Copolymere.

Homopolymere von Formaldehyd oder Trioxan sind dabei solche Polymere, deren Hydroxylendgruppen in bekannter Weise chemisch gegen Abbau stabilisiert sind, z. B. durch Veresterung oder Verätherung.

Copolymere sind Polymere aus Formaldehyd oder seinen cyclischen Oligomeren, insbesondere Trioxan, und cyclischen Äthern, cyclischen Acetalen und/oder linearen Polyacetalen.

Als Comonomere kommen

a) cyclische Äther mit 3, 4 oder 5, vorzugsweise 3 Ringgliedern,
b) von Trioxan verschiedene cyclische Acetale mit 5 - 11, vorzugsweise 5, 6, 7 oder 8 Ringgliedern und
c) lineare Polyacetale, jeweils in Mengen von 0,1 - 20, vorzugsweise 0,5 - 10 Gew.-%, in Frage.

Am besten eignen sich Copolymere aus 99 - 95 Gew.-% Trioxan und 1 - 5 Gew.-% einer der vorgenannten Cokomponenten.

Als Comonomere für Trioxan sind besonders Verbindungen der Formel

$$CH_2 - [CR^1H]_x - [O - (CR^2H)_z]_y - O \qquad (I)$$

geeignet, in der

(A) $R^1$ und $R^2$ gleich oder verschieden sind und jeweils ein Wasserstoffatom, einen aliphatischen Alkylrest mit 1 - 6, vorzugsweise 1, 2, 3 oder 4 Kohlenstoffatomen oder einen Phenylrest bedeuten und (a) x gleich 1, 2 oder 3 und y gleich Null ist oder (b) x gleich Null, y gleich 1, 2 oder 3 und z gleich 2 ist oder (c) x gleich Null, y gleich 1 und z gleich 3, 4, 5 oder 6 ist, oder

(B) $R^1$ einen Alkoxymethylrest mit 2 - 6, vorzugsweise 2, 3 oder 4 Kohlenstoffatomen oder einen Phenoxymethylrest bedeutet, wobei x gleich 1 und y gleich Null ist.

Als cyclische Äther kommen vor allem Epoxide, z. B. Äthylenoxid, Propylenoxid, Cyclohexenoxid, Styroloxid und Epichlorhydrin sowie Phenylglycidyläther in Frage.

Als cyclische Acetale eignen sich vor allem cyclische Formale von aliphatischen oder cycloaliphatischen, α,ω-Diolen mit 2 - 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z. B. Glykolformal (1,3-Dioxolan), Propandiolformal (1,3-Dioxan), Butandiolformal (1,3-Dioxepan), und Diglykolformal (1,2,6-Trioxocan) sowie 4-Chlormethyl-1,3-dioxolan und Hexandiolformal (1,3-Dioxocan). Auch ungesättigte Formale wie Butandiolformal (1,3-Dioxacyclohepten-[5]) kommen in Frage.

Als lineare Polyacetale sind sowohl Homo- oder Copolymere der vorstehend definierten cyclischen Acetale als auch lineare Kondensate aus aliphatischen oder cycloaliphatischen α,ω-Diolen mit aliphatischen Aldehyden, vorzugsweise Formaldehyd einsetzbar. Insbesondere werden Homopolymere cyclischer Formale von aliphatischen α,ω-Diolen mit 2 - 8, vorzugsweise 2, 3 oder 4 Kohlenstoffatomen verwendet, z. B. Poly(1,3-dioxolan), Poly(1,3-dioxan) und Poly(1,3-dioxepan).

Als zusätzliche Comonomere für Trioxan werden gegebenenfalls noch Verbindungen mit mehreren polymerisierbaren Gruppen im Molekül, z. B. Alkylglycidylformale, Polyglykoldiglycidyläther, Alkandioldielycidyläther oder Bis-(alkantriol)-triformale verwendet, und zwar in einer Menge von 0,05 - 5, vorzugsweise 0,1 - 2 Gew.-%, bezogen auf die Gesamtmonomermenge.

Unter Alkylglycidylformalen sind Verbindungen der Formel

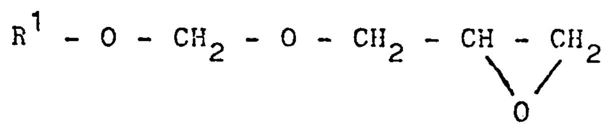 (II)

zu nennen, in der $R^1$ einen aliphatischen Alkylrest mit 1 - 10, vorzugsweise 1 - 5 Kohlenstoffatomen bedeutet. Besonders gut geeignet sind Alkylglycidylformale der obigen Formel mit linearen, gesättigten aliphatischen Alkylresten, z. B. Methylglycidylformal, Äthylglycidylformal, Propylglycidylformal und Butylglycidylformal.

Als Polyglykoldiglycidyläther werden Verbindungen der Formel (III) bezeichnet

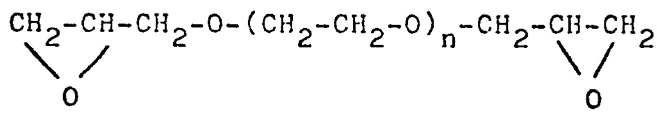 (III)

in der n eine ganze Zahl von 2 - 5 bedeutet. Insbesondere eignen sich Polyglykoldiglycidyläther der vorstehenden Formel, in der n für 2 oder 3 steht, z. B, Diäthylenglykoldiglycidyläther und Triäthylenglykoldielycidyläther.

Alkandioldiglycidyläther sind Verbindungen der Formel (IV)

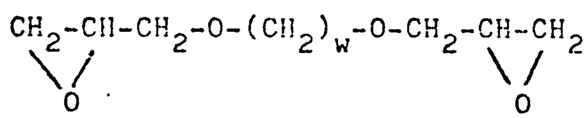 (IV)

in der w eine ganze Zahl von 2 - 6, vorzugsweise 2, 3 oder 4 bedeutet. Insbesondere geeignet ist Butandioldiglycidyläther.

Unter Bis(alkantriol)-triformalen werden Verbindungen mit einer linearen und zwei cyclischen Formalgruppen verstanden, insbesondere Verbindungen der Formel (V)

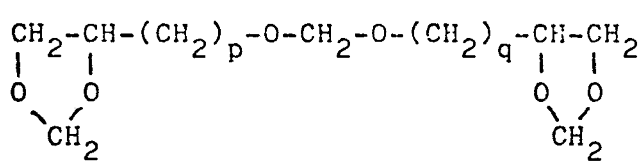 (V)

in der p und q jeweils eine ganze Zahl von 3 - 9, vorzugsweise 3 oder 4, bedeuten. Es eignen sich vor allem symmetrische Bis-(alkantriol)-triformale der vorgenannten Formel, in der p und q die gleiche Zahl bedeuten, z. B. Bis(1,2,5-pentantriol)-triformal und vorzugsweise Bis(1,2,6-hexantriol)-triformal.

Die Werte für die reduzierte spezifische Viskosität (RSV-Werte) des Polyoxymethylens betragen im allgemeinen 0,3 - 2,0 $dl \cdot g^{-1}$, vorzugsweise 0,5 - 1,5 $dl \cdot g^{-1}$ (gemessen in Butyrolacton, stabilisiert mit 2 Gew.-% Diphenylamin bei 140°C in einer Konzentration von 0,5 g/100 ml) und die Schmelzindex-Werte MFI 190/2 liegen

zumeist zwischen 0,02 und 10 g·min$^{-1}$. Der Kristallitschmelzpunkt des Polyoxymethylens liegt im Bereich von 140 - 180°C, vorzugsweise 150 - 170°C; seine Dichte beträgt 1,38 - 1,45 g·ml$^{-1}$, vorzugsweise 1,40 - 1,43 g·ml$^{-1}$ (gemessen nach DIN 53 479).

Die erfindungsgemäß verwendeten, vorzugsweise binären oder ternären Trioxan-Copolymeren werden in bekannter Weise durch Polymerisieren der Monomeren in Gegenwart kationisch wirksamer Katalysatoren bei Temperaturen zwischen 0 und 100°C, vorzugsweise 50 und 90°C, hergestellt (vgl. z. B. US-Patentschrift 3 027 352). Als Katalysatoren werden hierbei beispielsweise Lewissäuren, z. B. Bortrifluorid und Antimonpentafluorid und Komplexverbindungen von Lewissäuren, vorzugsweise Ätherate, z. B. Bortrifluorid-di-Äthyl-ätherat und Bortrifluorid-ditert.-Butyl-ätherat, verwendet. Ferner sind geeignet Protonensäuren, z. B. Perchlorsäure, sowie salzartige Verbindungen, z. B. Triphenylmethylhexafluorphosphat, Triäthyloxoniumtetrafluoroborat oder Acetylperchlorat. Die Polymerisation kann in Masse, Suspension oder Lösung erfolgen. Die Copolymeren können aber auch in bekannter Weise durch geeignete thermische Behandlung von Gemischen aus Homopolymeren des Formaldehyds und den genannten Comonomeren und/oder Copolymeren aus Formaldehyd und den genannten Comonomeren in Gegenwart von oben beschriebenen Katalysatoren hergestellt werden.

Zur Entfernung instabiler Anteile werden die Copolymeren zweckmäßigerweise einem thermischen oder hydrolytischen kontrollierten partiellen Abbau bis zu primären Alkoholengruppen unterworfen (vgl. US-Patentschriften 3 103 499 und 3 219 623).

Die erfindungsgemäß verwendeten Homopolymeren des Formaldehyds oder des Trioxans werden ebenfalls in bekannter Weise durch katalytisches Polymerisieren des Monomeren hergestellt (vgl. z. B. US-Patentschriften 2 768 994 und 2 989 505) und durch Veresterung oder Verätherung gegen den Abbau vom Kettenende stabilisiert.

Die erfindungsgemäß dem Polyoxymethylen einzumischenden Polyurethane, die vorzugsweise thermoplastischen Charakter aufweisen, werden in bekannter Weise durch Polyaddition von aliphatischen Polyisocyanaten, insbesondere aliphatischen Diisocyanaten und aliphatischen Polyhydroxylverbindungen wie Polyestern, Polyäthern, Polyesteramiden oder Polyacetalen oder Gemischen davon hergestellt, gegebenenfalls in Anwesenheit von Kettenverlängerern.

Geeignete aliphatische Polyisocyanate sind insbesondere aliphatische Diisocyanate der allgemeinen Formel

$$OCN - R - NCO \qquad (VI)$$

in der R ein gesättigter geradkettiger oder verzweigter aliphatischer Rest mit 1 bis 20, vorzugsweise 2 bis 12 C-Atomen oder ein unsubstituierter oder substituierter gesättigter cycloaliphatischer zweiwertiger Rest mit 4 bis 20, vorzugsweise 6 bis 15 C-Atomen ist.

R kann in obiger Formel (VI) auch eine Kombination von zweiwertigen offenkettigen aliphatischen und cycloaliphatischen Resten darstellen und beispielsweise die Bedeutung

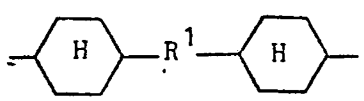

(VII)

haben, worin $R^1$ einen gesättigten geradkettigen oder verzweigten aliphatischen Rest mit 1 bis 8, vorzugsweise 1 bis 3 C-Atomen bedeutet. Die beiden Ringe stehen dabei vorzugsweise für das unsubstituierte Cyclohexan, während $R^1$ vorzugsweise die Methylen-, Äthylen-, Methylmethylen- oder Dimethylmethylen-Gruppe bedeutet.

Falls R einen offenkettigen zweiwertigen Rest darstellt, so steht er vorzugsweise für einen unverzweigten Alkylidenrest $-(CH_2)_n-$ mit n = 2 bis 12. Beispiele hierfür sind der Äthyliden-, Propyliden-, Pentamethylen- und der Hexamethylenrest sowie der 2-Methylpentamethylen-, der 2,2,4-Trimethylhexamethylen- oder der 2,4,4-Trimethylhexamethylenrest. Diisocyanate dieses Typs, die besonders bevorzugt werden, sind das Hexamethylen-diisocyanat sowie 2,2,4- und 2,4,4-Trimethylhexamethylendiisocyanat.

Wenn R in obiger Formel (VI) eine cycloaliphatischen Rest bedeutet, so ist dies bevorzugt der unsubstituierte oder substituierte Cyclohexanrest. Beispiele für Diisocyanate dieses Typs sind 1,2- oder 1,4-Di-(iso-cyanatomethyl)-cyclohexan oder Isophorondiisocyanat.

Die Diisocyanate der Formel (VI) können auch in oligomerer, beispielsweise in dimerer oder trimerer Form zum Einsatz kommen. Anstelle der Polyisocyanate können auch in bekannter Weise blockierte Polyisocyanate verwendet werden, die man aus den genannten Isocyanaten z. B. durch Addition von Phenol oder Caprolactam erhält.

Als aliphatische Polyhydroxylverbindungen kommen Polyäther, wie Polyäthylenglykoläther, Polypropylenglykoläther und Polybutylenglykoläther, Poly-1,4-butandioläther oder Mischpolyäther aus Äthylenoxid und Propylenoxid in Betracht. Außerdem können für diesen Zweck Polyesteramide, Polyacetale und vorzugsweise aliphatische Polyester eingesetzt werden, wobei alle diese Verbindungen freie OH-Endgruppen besitzen.

Bei den vorzugsweise verwendeten aliphatischen Polyestern handelt es sich im wesentlichen um unvernetzte Polyester mit Molekulargewichten von 500 - 10 000, vorzugsweise von 500 - 5 000. Hinsichtlich der Säurekomponente leiten sie sich von unverzweigten und/oder verzweigten aliphatischen Dicarbonsäuren ab, wie z. B. Dicarbonsäuren der allgemeinen Formel

$$HOOC-(CH_2)_n-COOH \qquad (VII)$$

mit n = 0 bis 20, vorzugsweise 4 bis 10, insbesondere Adipinsäure und Sebazinsäure. Auch cycloaliphatische Dicarbonsäuren, wie Cyclohexandicarbonsäuren sowie Gemische mit den obigen aliphatischen Dicarbonsäuren können für diesen Zweck eingesetzt werden.

Als Alkoholkomponente für diese Polyester kommen vor allem unverzweigte oder verzweigte aliphatische primäre Diole, wie z. B. Diole der allgemeinen Formel

$$HO-(CH_2)_m-OH \qquad (IX)$$

in Betracht, in der m = 2 bis 12, vorzugsweise 2 bis 6 bedeutet. Genannt seien hier insbesondere Äthylenglykol, 1,4-Butandiol, 1,6-Hexandiol und 2,2-Dimethylpropandiol-1,3 sowie Diäthylenglykol. Auch cycloaliphatische Diole, wie Bis-hydroxymethyl-cyclohexane, oder Gemische mit den aliphatischen Diolen sind hierfür geeignet.

Die Polyester können aus jeweils einer Dicarbonsäure und einem Diol, aber auch, wie erwähnt, aus Gemischen mehrerer Dicarbonsäuren und/oder mehreren Diolen hergestellt werden.

Als Kettenverlängerer bei der Herstellung der Polyurethane sind vor allem niedermolekulare Polyole, insbesondere Diole sowie Polyamine, insbesondere Diamine oder auch Wasser in Betracht zu ziehen.

Die erfindungsgemäß eingesetzten Polyurethane sind vorzugsweise thermoplastisch und damit vorzugsweise im wesentlichen unvernetzt, d. h. wiederholt ohne nennenswerte Zersetzungserscheinungen schmelzbar. Ihre reduzierten spezifischen Viskositäten, gemessen bei 30°C in Dimethylformamid, liegen in der Regel bei 0,5 - 3 dl/g, vorzugsweise bei 1 - 2 dl/g. Die Werte für die Reißdehnungen betragen zweckmäßigerweise 800 - 1 500 %, vorzugsweise 1 000 - 1 500 %, während die Shore-Härte A bei höchstens 81, vorzugsweise zwischen 80 - 60 und die Glastemperatur zumeist nicht höher als - 10°C, vorzugsweise nicht höher als -20°C liegen.

Die Menge an diesem Polyurethan beträgt in den erfindungsgemäßen Mischungen 5 bis 60 Gew.-% vorzugsweise 10 bis 40 Gew.-% und insbesondere 10 bis 30 Gew.-%, bezogen auf die Gesamtmischung.

Die erfindungsgemäße Mischung kann gegebenenfalls noch die bekannten Zusatzstoffe, wie Stabilisatoren, Nukleierungsmittel, Antistatika, Licht- und Flammschutzmittel, Gleit- und Schmiermittel, Weichmacher, Pigmente, Farbstoffe, optische Aufheller, Entformungshilfsmittel u.dgl. enthalten.

Als Stabilisatoren gegen den Einfluß von Wärme eignen sich insbesondere Polyamide, Amide mehrbasiger Carbonsäuren, Amidine, z. B. Dicyandiamid, Hydrazine, Harnstoffe, Poly-(N-vinyllactame) und Erdalkalisalze von aliphatischen, vorzugsweise hydroxylgruppenhaltigen, ein- bis dreibasigen Carbonsäuren mit 2 - 20 Kohlenstoffatomen, z. B. Calciumstearat, Calciumrizinoleat, Calciumlactat und Calciumcitrat. Als Oxidationsstabilisatoren werden vor allem Bisphenolverbindungen verwendet, vorzugsweise Diester von einbasigen 4-Hydroxyphenylalkansäuren, die 7 - 13, vorzugsweise 7, 8 oder 9 Kohlenstoffatome aufweisen, mit Diolen, die 2 - 6 Kohlenstoffatome enthalten. Als Lichtstabilisatoren sind beispielsweise α-Hydroxybenzophenonderivate und Benzotriazolderivate geeignet. Die Stabilisatoren werden zumeist in einer Menge von insgesamt 0,1 - 5, vorzugsweise 0,5 - 3 Gew.-% (bezogen auf die gesamte Formmasse) eingesetzt.

Auch die üblichen Füllstoffe wie beispielsweise Glasfasern, Glaspulver, Graphit, Ruß, Metallpulver, Metalloxide, Silikate, Carbonate und Molybdän(IV)-sulfid kann die erfindungsgemäße Mischung enthalten. Die Menge des Füllstoffes beträgt in diesem Fall bis zu 70 Gew.-%, vorzugsweise 5 bis 40 Gew.-% bezogen auf die Gesamtmischung. Vorzugsweise enthält die erfindungsgemäße Mischung jedoch keine Füllstoffe.

Die Herstellung der erfindungsgemäßen Mischung erfolgt in einfacher Weise durch Mischen der Bestandteile bei erhöhter Temperatur, bei der die Polymer-Komponenten schmelzen, sich aber noch nicht zersetzen, d.h. im allgemeinen bei 160 bis 250°C, vorzugsweise bei 180 bis 240°C, in gut mischenden Aggregaten wie z. B. Brabendern, Extrudern, vorzugsweise Zweischneckenextrudern, oder auf Mischwalzen. Natürlich können die Komponenten auch zunächst bei Raumtemperatur mechanisch gemischt und zur vollständigen Homogenisierung dann anschließend aufgeschmolzen werden. Es hat dich dabei gezeigt, daß durch bloßes mechanisches Mischen ohne Aufschmelzen kein Gemisch erhalten wird, in dem die Bestandteile so homogen verteilt sind, wie dies wünschenswert wäre.

Die erfindungsgemäße Mischung läßt sich mechanisch, z. B. durch Zerhacken oder Mahlen, zu Granulaten, Schnitzeln, Flocken oder Pulvern zerkleinern. Sie ist thermoplastisch und damit allen für thermoplastischen Massen typischen Verarbeitungsweisen zugänglich. Sie kann daher durch Spritzgießen, Strangpressen, Schmelzspinnen oder Tiefziehen zu beliebigen Formkörpern verarbeitet werden und eignet sich als technischer Werkstoff zur Herstellung von Halbzeug und Fertigteilen, wie Formkörpern, z. B. Bändern, Stäben, Platten, Filmen, Rohren und Schläuchen, sowie Maschinenteilen, z. B. Gehäusen, Zahnrädern, Lagerteilen und Steuerelementen sowie von Autozubehörteilen, wie Spoilern u.dgl.

Überraschenderweise ist die Zähigkeit der erfindungsgemäßen Mischung gegenüber der des reinen Polyoxymethylens schon bei sehr viel niedrigeren Polyurethangehalten stark erhöht als es beispielsweise der Lehre der DE-Offenlegungsschrift 2 051 028 entspricht. Während danach nämlich ein Polyurethangehalt von 40 bis 60 Gew.-% als notwendig gilt, zeigen die erfindungsgemäßen Mischungen bereits bei Polyurethangehalten von 5 Gew.-% aufwärts, insbesondere bei 10 bis 30 Gew.-%, stark erhöhte Zähigkeiten, vor allem erhöhte Kerbschlagzähigkeiten. Polyurethane mit Shore-Härten von 85 und mehr und mit Reißdehnungen von weniger als 800 % erhöhen dagegen bei relativ niedrigem Polyurethangehalt die Kerbschlagzähigkeit von Mischungen mit Polyoxymethylenen nicht oder nur sehr wenig. Die aus der erfindungsgemäßen Mischung hergestellten

Formkörper zeichnen sich neben der verbesserten Kerbschlagzähigkeit auch durch geringen Oberflächenglanz aus. Bei höheren Polyurethangehalten ist auch die Lackierarbeit recht gut.

Die nachfolgenden Beispiele beschreiben die vorliegende Erfindung. Die in diesen Beispielen benutzten Größen wurden dabei wie folgt bestimmt:

**RSV-Wert**

a) Polyoxymethylen: Messung in Butyrolacton, stabilisiert mit 2 Gew.-% Diphenylamin, bei 140°C in einer Konzentration von 0,5 g/100 ml.

b) Polyurethan: Messung in Dimethylformamid bei 30°C in einer Konzentration von 0,5 g/100 ml.

50 %-Bruchenergie: Gemäß DIN 53 443 an 2 mm starken Platten bestimmt.

Shore-Härte A: Gemäß DIN 53 505.

Kerbschlagzähigkeit: Gemäß DIN 53 453 am Normkleinstab.

**Beispiele**

Verschiedene Gewichtsmengen von Polyoxymethylen und Polyurethan, beides wahlweise als Pulver oder Granulat mit einer Korngröße von ca. 3 mm, wurden in einem Zweiwellenextruder des Typs ZDSK der Firma Werner & Pfleiderer bei Temperaturen zwischen 190 und 230°C geschmolzen und homogenisiert. Der austretende Schmelzstrang wurde gekühlt, granuliert und getrocknet. Die Produkte wurden auf dem üblichen Weg durch Spritzguß zu Formkörpern verarbeitet, an denen die aus der nachfolgenden Tabelle erhältlichen Werte gemessen wurden.

Als Polyurethan bzw. als Polyoxymethylen wurden folgenden Materialen eingesetzt:

Polyurethan A: aromatisches Polyester-Polyurethan, 400 - 450 % Reißdehnung, Shore-Härte A 85, Dichte 1,20 g $cm^{-3}$.

Polyurethan B: aromatisches Polyester-Polyurethan, 550 - 500 % Reißdehnung, Shore-Härte A 80, Dichte 1,19 g $cm^{-3}$.

Polyurethan C: aliphatisches Polyester-Polyurethan mit Hexamethylendiisocyanat, Adipinsäure, Äthylenglykol, Butandiol-1,4, Neonpentylglykol und Hexandiol-1,6 als Hauptbestandteilen, 1070 % Reißdehnung, Shore-Härte A 72, RSV-Wert 1,5 dl/g, Dichte 1,14 g $cm^{-3}$.

Polyurethan D: aromatisches Polyäther-Polyurethan, 45 % Reißdehnung, Shore-Härte A 80, Dichte 1,13 g $cm^{-3}$.

Polyurethan E: aromatisches Polyäther-Polyurethan, 350 % Reißdehnung, Shore-Härte A $\geqslant$ 90, Shore-Härte D 55, Dichte 1,15 g $cm^{-3}$.

Polyurethan F: aromatisches Polyester-Polyurethan, 600 % Reißdehnung, Shore-Härte A 80, Dichte 1,18 g $cm^{-3}$.

Polyoxymethylen: Copolymerisat aus Trioxan und ca. 2 Gew.-% Äthylenoxid, Schmelzindex MFI 190/2 ca. 0,9 $g \cdot min^{-1}$, Dichte 1,41 $g \cdot cm^{-3}$. Stabilisator: 0,1 Gew.-% Dicyandiamid und 0,4 Gew.-% phenolisches Antioxydans.

**Tabelle:**

| Polyurethan Typ | Gehalt (Gew.-%) | Kerbschlagzähigkeit ($kJm^{-2}$) | 50 % Bruchenergie (Joule) | Oberflächenbeschaffenheit** |
|---|---|---|---|---|
| ./* | 0 | 6,0 | 1,2 | glänzend |
| A* | 10 | 5,7 | | " |
| A* | 20 | 7,5 | | " |
| B* | 15 | 8,9 | | " |
| B* | 25 | 9,4 | | " |
| D* | 20 | 6,0 | | " |
| E* | 20 | 3,8 | | " |
| F* | 20 | 8,0 | | " |
| F* | 30 | 10,1 | | " |
| F* | 40 | 14,2 | | " |
| F* | 50 | 19,6 | | " |

| | | | | |
|---|---|---|---|---|
| C | 5 | 6,0 | 4,5 | schwachglänzend |
| C | 10 | 9,2 | 13,0 | matt |
| C | 15 | 12,0 | 20,0 | " |
| C | 20 | 17,0 | 24,0 | " |
| C | 30 | 23,0 | 35,0 | " |
| C | 40 | 33,0 | >36 | " |
| C | 50 | kein Bruch | >36 | " |

* zum Vergleich
** Visuell bestimmt

**Patentansprüche**

1. Mischung, bestehend im wesentlichen aus Polyoxymethylen und aus 5 bis 60 Gew.-%, bezogen auf die Gesamtmischung, Polyurethan, dadurch gekennzeichnet, daß das Polyurethan ausschließlich aus aliphatischen Komponenten aufgebaut ist, eine Reißdehnung von 800 - 1 500 % und eine Shore-Härte A von höchstens 81 aufweist.
2. Mischung nach Anspruch 1, dadurch gekennzeichnet, daß das Polyurethan eine Shore-Härte A von 80 bis 60 besitzt.
3. Mischung nach Anspruch 1 oder 2, dadurch gekennzeichnet, daß die Menge an Polyurethan 10 bis 40 Gew.-% beträgt.
4. Mischung nach einem oder mehreren der Ansprüche 1 bis 3, dadurch gekennzeichnet, daß das Polyurethan thermoplastisch ist.
5. Mischung nach einem oder mehreren der Ansprüche 1 bis 4, dadurch gekennzeichnet, daß das Polyurethan ein Polyester-Polyurethan ist.
6. Mischung nach einem oder mehreren der Ansprüche 1 bis 5, dadurch gekennzeichnet, daß das Polyurethan Methylsubstituenten an der Hauptkette trägt.
7. Mischung nach einem oder mehreren der Ansprüche 1 bis 6, dadurch gekennzeichnet, daß das Polyurethan im wesentlichen aus Hexamethylendiisocyanat, Adipinsäure, Äthylenglykol, Butandiol-1,4, Neopentylglykol und Hexandiol-1,6 aufgebaut ist.
8. Formkörper, hergestellt aus der Mischung gemäß einem oder mehreren der Ansprüche 1 bis 7.

**Claims**

1. A mixture essentially composed of a polyoxymethylene and of 5 to 60 % by weight, based on the total mixture, of a polyurethane, wherein the polyurethane is built up exclusively from aliphatic components and has an elongation at break of 800 - 1,500 % and a Shore hardness A not exceeding 81.
2. A mixture as claimed in claim 1, wherein the polyurethane has a Shore hardness A of 80 to 60.
3. A mixture as claimed in claim 1 or 2, wherein the amount of polyurethane is 10 to 40 % by weight.
4. A mixture as claimed in one or more of claims 1 to 3, wherein the polyurethane is thermoplastic.
5. A mixture as claimed in one or more of claims 1 to 4, wherein the polyurethane is a polyester-polyurethane.
6. A mixture as claimed in one or more of claims 1 to 5, wherein the polyurethane carries methyl substituents on the main chain.
7. A mixture as claimed in one or more of claims 1 to 6, wherein the polyurethane is essentially built up from hexamethylene diisocyanate, adipic acid, ethylene glycol, 1,4-butanediol, neopentylglycol and 1,6-hexanediol.
8. A shaped article produced from the mixture as claimed in one or more of claims 1 to 7.

**Revendications**

1. Mélange, consistant essentiellement en du polyoxyméthylène et en 5 à 60 % en poids, sur la base du mélange total, de polyuréthanne, mélange caractérisé en ce que le polyuréthanne est composé exclusivement de composants aliphatiques, il présente un allongement à la rupture de 800 à 1500 % et une dureté Shore A d'au maximum 81.
2. Mélange selon la revendication 1, caractérisé en ce que le polyuréthanne possède une dureté Shore A de 80 à 60.
3. Mélange selon la revendication 1 ou 2, caractérisé en ce que la proportion du polyuréthanne est de 10 à 40 % en poids.
4. Mélange selon une ou plusieurs des revendications 1 à 3, caractérisé en ce que le polyuréthanne est

thermoplastique.

5. Mélange selon une ou plusieurs des revendications 1 à 4, caractérisé en ce que le polyuréthanne est un polyester-polyuréthanne.

6. Mélange selon une ou plusieurs des revendications 1 à 5, caractérisé en ce que le polyuréthanne porte des substituants méthyles sur sa chaîne principale.

7. Mélange selon une ou plusieurs des revendications 1 à 6, caractérisé en ce que le polyuréthanne est constitué essentiellement de diisocyanates d'hexaméthylène, d'acide adipique, d'éthylèneglycol, de butanediol-1,4 de néopentylglycol et d'hexanediol-1,6.

8. Objet façonné ou moulé, produit à partir du mélange selon une ou plusieures des revendications 1 à 7.